(19) Europäisches Patentamt
European Patent Office
Office européen des brevets

(11) Veröffentlichungsnummer: **0 288 812 B1**

(12) # EUROPÄISCHE PATENTSCHRIFT

(45) Veröffentlichungstag der Patentschrift: **07.08.91**

(51) Int. Cl.⁵: **C11D 3/00**, C11D 7/10, C23F 11/18

(21) Anmeldenummer: **88105761.6**

(22) Anmeldetag: **12.04.88**

(54) **Verwendung eines Mittels zur Verhinderung von Korrosion an keramischen Oberflächen.**

(30) Priorität: **30.04.87 DE 3714451**

(43) Veröffentlichungstag der Anmeldung:
**02.11.88 Patentblatt 88/44**

(45) Bekanntmachung des Hinweises auf die
Patenterteilung:
**07.08.91 Patentblatt 91/32**

(84) Benannte Vertragsstaaten:
**AT BE CH DE FR GB IT LI NL SE**

(56) Entgegenhaltungen:
**EP-A- 184 099**
**EP-A- 0 096 619**
**DE-A- 2 750 257**
**GB-A- 2 023 165**
**US-A- 4 613 450**

(73) Patentinhaber: **HOECHST AKTIENGESELL-
SCHAFT**
**Postfach 80 03 20**
**W-6230 Frankfurt am Main 80(DE)**

(72) Erfinder: **Ulrich, Hannsjörg, Dr.**
**Von-Bodelschwingh-Weg 47**
**W-5042 Erftstadt(DE)**
Erfinder: **Westermann, Lothar**
**Ludwigstrasse 8**
**W-5000 Köln(DE)**

Rank Xerox (UK) Business Services

## Beschreibung

Gegenstand der vorliegenden Erfindung ist die Verwendung eines Mittels zur Verhinderung von Korrosion an Oberflächen, welche aus schmelzflüssigen Silikaten entstanden sind.

Zu diesen Oberflächen gehören beispielsweise solche aus Emaille, Glasuren auf Porzellan und insbesondere Glas.

Es hat sich gezeigt, daß derartige silikatischen Oberflächen vor allem dann Korrosionen erleiden, wenn sie wiederholt mit Spül- und Reinigungsmitteln in Kontakt gebracht werden.

Solche Spül- und Reinigungsmittel waren bislang im wesentlichen aus Phosphaten aufgebaut.

Im Zuge der Bemühungen, die Verwendung von Phosphaten einzuschränken, werden in diesen Mitteln die Phosphate in zunehmendem Maße durch Silikate, gegebenenfalls in Verbindung mit starken Komplexbildnern, ersetzt.

Dies hat zur Folge, daß beim Gebrauch dieser neuen Spül-und Reinigungsmittel mehr und mehr Korrosionen auf glasigen Oberflächen zu beobachten sind; selbst dann, wenn man auf den Einsatz von starken Komplexbildnern, wie z.B. Alkylendiphosphonsäuren, verzichtet.

Überraschenderweise wurde nun gefunden, daß Mittel zur Verhinderung von Korrosion an keramischen Oberflächen wie Glas, Emaille oder Glasuren auf Porzellan, welche eine Fluorverbindung enhalten, die in wäßrigem Medium mindestens schwach löslich ist, verwendet werden können, wenn die Mittel in wäßrigem Medium bei einem pH-Wert von größer als 7 benutzt werden.

Solche Fluorverbindungen sind beispielsweise Alkali- oder Ammoniummonofluorid oder -aluminiumhexafluorid oder Zinntetrafluorid. Insbesondere eignen sich hierfür jedoch Alkali- oder Ammoniumsilikofluoride oder Alkali- oder Ammoniumfluorophosphate, wie $Na_2PO_3F$ oder $NaPO_2F_2$ oder $NaPF_5$.

Vorteilhafterweise enthalten die erfindungsgemäß verwendeten Mittel 0,1 bis 5,0 Gew% der Fluorverbindung und zusätzlich solche Komponenten, wie sie in Geschirrspül- und Reinigungsmitteln üblich sind.

Derartige Komponenten sind im allgemeinen Buildersubstanzen, wie z.B. Alkalitriphosphate, Zeolithe, Bentonite, Polycarboxylate, Schichtsilikate, Nitrilotriessigsäure (NTA), Ethylendiamintetraessigsäure, Phosphonocarbonsäuren, Amidophosphonsäure u.s.w., Alkaliträger, wie z.B. $Na_2SiO_3$, $Na_2Si_2O_5$, NaOH, $Na_2CO_3$,

Tenside, wie z.B. schwachschäumende Blockpolymere mit Ethylen- und Propylengruppen,

Aktivchlorträger, wie NaOCl, Di- und Trichlorisocyanurate, Chloramin T, Chlorsulfonsäuren,, chlorierte Orthophosphate u.s.w.,

Füllstoffe, wie Wasser $Na_2SO_4$, $SiO_2$ u.s.w.,

Parfüme und Farbstoffe.

Diese Komponenten können in den erfindungsgemäßen Mitteln einzeln oder in Gemischen neben den Fluorverbindungen enthalten sein.

Vorteilhafterweise enthalten die sich daraus ergebenden Mischungen an Builder-Substanzen und Alkaliträger zusammen 30 bis 95 Gew% sowie an der Fluorverbindung 0,1 bis 5,0 Gew%, vorzugsweise 0,5 bis 2,0 Gew%, wobei deren Menge so gewählt ist, daß der Gehalt an Fluor in der genannten Mischung mindestens 0,05 Gew% beträgt.

Da von Fluor allgemein bekannt ist, daß es Oberflächen, welche aus schmelzflüssigen Silikaten entstanden sind - wie insbesondere Glas - angreift, war es für einen Fachmann nicht vorhersehbar und völlig überraschend, daß Fluorverbindungen auf derartige Oberflächen, in einem wäßrigen Medium mit einem pH-Wert größer als 7, korrosionsinhibierend wirken.

Werden die erfindungsgemäß verwendeten Mittel beispielsweise als Geschirrspül- oder Reinigungsmittel eingesetzt, so tritt noch ein willkommener Nebeneffekt auf.

Es hat sich nämlich gezeigt, daß sich bei Verwendung von Geschirrspülmitteln, die sich durch hohe Gehalte an Silikaten und starken Komplexbildnern auszeichnen, unterschiedlich starke Ablagerungen auf Metalloberflächen der Maschinenwandung oder der Bestecke feststellen lassen, die sich zunächst in blau-violetten Anlauffarben, später in weißlich - trüben, blaustichigen festhaftenden Belägen darstellen. Diese Beläge sind nur noch durch starke Säuren - wie z.B. konzentrierte Salzsäure unter mechanischer Reibung zu entfernen.

Nun hat sich ergeben, daß die Ablagerungen der beschriebenen Art und die Korrosion auf den Metalloberflächen durch die erfindungsgemäß verwendeten Mittel, insbesondere durch solche, die Fluorophosphate oder Silikofluoride als Fluorverbindung enthalten, gleichfalls verhindert werden.

In der DE-A-27 50 257 wird ein Reinigungsmittel für glaskeramische Werkstoffe beschrieben, bei dem in Anwesenheit von Fluorwasserstoff und Paraffin und/oder Wachs Metalloxide entfernt werden.

Die GB-A-2 023 165 beschreibt ein Korrosions-InhibitorSystem für Metalle, das Fluorwasserstoff in Kombination mit Nitrilen verwendet.

2

Die EP-A-0 184 099 beansprucht ein Wäschenachbehandlungsmittel, welches als Säuerungsmittel Hexafluorkieselsäure und/oder ihre wasserlöslichen Salze enthält.

Hinweise auf die korrosionsverhindernde Wirkung bestimmter Fluorverbindungen in wasserführenden Rohrleitungen aus Metall sind auch in der US-A-4 613 450 enthalten.

Durch die nachfolgenden Beispiele soll die Wirkung der erfindungsgemäßen Mittel näher erläutert werden.

Beispiel 1 (Vergleichsbeispiel)

Eine handelsübliche Geschirrspülmaschine wurde mit 12 Maßgedecken weißen Porzellans als Grundlast beladen. Gleichzeitig wurden der Füllung je 12 Messer, Gabeln und Löffel aus Edelstahl zugegeben. Im oberen Korb wurden darüberhinaus je 6 Gläser verschiedener Herstellung beigestellt. Hierbei handelte es sich um folgende Glastypen:

a) Becher "ROMA", Fa. Schott-Zwiesel-Glaswerke AG
b) Kölsch-Stangen, Fa. VEBA-GLAS
c) Weinglas "Alexandra", Fa. Nachtmann

Die Gläser hatten unterschiedliche Zusammensetzung der Glasmasse, deren Analysen nicht bekannt sind, und sehr verschiedene Oberflächengestaltung durch ihre Fertigungsverfahren. Der Maschineninhalt wurde mit enthärtetem Wasser von 2 bis max. 5° d unter Verwendung von 30 g Reinigungsmittel pro Spülgang und 3 ml Klarspüler pro Spülgang 1000mal ohne Speiseanschmutzungen gespült. Der Reinigungsgang wurde mit 6,5 l Wasser bei 65° C durchgeführt. Zwischen jedem Spülzyklus wurde der Inhalt 30 Minuten bei offener Türe getrocknet. Das verwendete Spülmittel war wie folgt rezeptiert (Norm der International Electrochemical Commission)

50,00 Gew% Natriumtripolyphosphat, teilhydratisiert mit ca. 7 Gew% Kristallwasser

40,00 Gew% Natriummetasilikat, wasserfrei

2,25 Gew% Natriumdichlorisocyanurat • 2 $H_2O$ (NaDCC)

2,00 Gew% Tensid

5,75 Gew% Natriumsulfat, wasserfrei

(Als Tensid wurde ein Blockpolymer der Fa. BASF Wyandotte Corp. mit Handelsnamen® Plurafac Ra 43 verwendet.)

Nach 50, 125, 250, 375, 500, 750 und 1000 Spülgängen wurde durch visuelle Beurteilung der Gläser und der Metallteile der Schaden festgestellt. Die Bewertung der Schadenshöhe erfolgte anhand einer Bewertungstabelle, deren Abstufung in 0,5 Punkte-Schritten eine gute Differenzierung zuläßt. 0 Punkte sind dabei schadensfrei, während 3,5 Punkte völlige Korrosion oder Zerstörung bedeuten.

Die durchschnittlichen Korrosionsdaten sind in Tabelle I zusammengestellt.

Tabelle I

| Spülgänge | Glas | | | Besteck | | |
|---|---|---|---|---|---|---|
| | Roma | Alexandra | Kölsch | Messer | Löffel | Gabel |
| 50 | 0,5 | 0 | 0 | 0 | 0 | 0 |
| 125 | 0,5 | 0 | 0,5 | 0 | 0 | 0 |
| 250 | 1,0 | 0,5 | 1,0 | 0 | 0 | 0 |
| 375 | 1,5 | 1,0 | 1,0 | 0 | 0 | 0 |
| 500 | 1,5 | 1,5 | 1,0 | 0 | 0 | 0,5 |
| 750 | 2,0 | 1,5 | 1,5 | 0,5 | 0 | 0,5 |
| 1000 | 2,5 | 1,5 | 2,0 | 1,0 | 0 | 1,5 |

Beispiel 2

Dem in Beispiel 1 beschriebenen Geschirrspülmittel wurde 1 Gew% $Na_2PO_3F$ (anstelle von 1 Gew% $Na_2SO_4$) zugesetzt. Der Schadensverlauf während der 1000 Spülgänge wird in Tabelle II veranschaulicht.

Tabelle II

| Spülgänge | Glas | | | Besteck | | |
|---|---|---|---|---|---|---|
| | Roma | Alexandra | Kölsch | Messer | Löffel | Gabel |
| 50 | 0 | 0 | 0 | 0 | 0 | 0 |
| 125 | 0 | 0 | 0 | 0 | 0 | 0 |
| 250 | 0 | 0 | 0 | 0 | 0 | 0 |
| 375 | 0 | 0 | 0 | 0 | 0 | 0 |
| 500 | 0 | 0 | 0 | 0 | 0 | 0 |
| 750 | 0 | 0 | 0,5 | 0,5 | 0 | 0 |
| 1000 | 0,5 | 0 | 0,5 | 0,5 | 0 | 0 |

Im Vergleich zu Beispiel 1 ist deutlich die Korrosionsinhibierung erkennbar.

Beispiel 3

Einem phosphatarmen Geschirrspülmittel folgender Zusammensetzung (A)

15 Gew% Natriumtripolyphosphat, teilhydratisiert mit 2 % Kristallwasser

60 Gew% Natriummetasilikat, wasserfrei

2 Gew% NaDCC

2 Gew% Tensid

21 Gew% $Na_2SO_4$ wasserfrei

wurde als Formulierung (B) 1 Gew% $Na_2SiF_6$ anstelle von 1 % $Na_2SO_4$ zugesetzt. Die Korrosionsdaten dieser beiden Rezepturen werden in Tabelle III verglichen. Mit Formulierung A waren nach ca. 50 Spülgängen das Edelstahlgehäuse der Maschine sowie die Bestecke blau-violett angelaufen, nach 125 Spülgängen wurde der Belag weißlich trüb, bei 750 Spülgängen war der Belag so stark, daß eine Auswertung der Bestecke nicht mehr erfolgen konnte.

Tabelle III

| Spülgänge | Glas | | | | | | Besteck | | | | | |
|---|---|---|---|---|---|---|---|---|---|---|---|---|
| | Roma | | Alexandra | | Kölsch | | Messer | | Löffel | | Gabel | |
| | A | B | A | B | A | B | A | B | A | B | A | B |
| 50 | 0 | 0 | 0 | 0 | 0,5 | 0 | 1,0 | 0 | 1,0 | 0 | 1,0 | 0 |
| 125 | 0,5 | 0 | 0 | 0 | 0,5 | 0 | 1,5 | 0 | 1,5 | 0 | 1,5 | 0 |
| 250 | 1,5 | 0 | 0,5 | 0 | 1,0 | 0 | 1,5 | 0 | 1,5 | 0 | 1,5 | 0 |
| 375 | 1,5 | 0 | 1,0 | 0 | 1,5 | 0 | 2,0 | 0 | 1,5 | 0 | 2,0 | 0 |
| 500 | 2,0 | 0 | 1,0 | 0 | 2,0 | 0 | 2,5 | 0 | 2,5 | 0 | 2,5 | 0 |
| 750 | 2,5 | 0 | 2,5 | 0,5 | 2,0 | 0 | n.a. | 0 | n.a. | 0 | n.a. | 0 |
| 1000 | 2,5 | 0,5 | 2,5 | 0,5 | 2,0 | 0 | n.a. | 0 | n.a. | 0 | n.a. | 0,5 |

n.a. = nicht auswertbar

Beispiel 4

Eine Rezeptur ohne Triphosphat, aber mit Hydroxyethylendiphosphonsäure (HEDP) als Komplexbildner (C) wurde mit 2 Gew% NaF (D) versetzt. Die Korrosionsdaten sind in Tabelle IV dargestellt.

Der Maschinenkörper und teilweise auch die Griffe der Besteckteile zeigten bei Rezeptur C nach ca. 50 Spülgängen fortschreitend die im 3. Beispiel beschriebenen Verfärbungen und Ablagerungen die allerdings nichts ganz so stark wurden.

Mit Rezeptur D blieben diese Erscheinungen aus. Jedoch zeigten sich ab ca. 125 Spülgängen an dem Maschinenkörper weiße, nicht entfernbare, rauhe Streifen.

Rezepturzusammensetzung

|  | C | | D | |
|---|---|---|---|---|
|  | 2 Gew% | HEDP | 2 Gew% | HEDP |
|  | 60 Gew% | $Na_2SiO_3$ | 60 Gew% | $Na_2SiO_3$ |
|  | 34 Gew% | $Na_2CO_3$ | 32 Gew% | $Na_2CO_3$ |
|  | 2 Gew% | NaDCC | 2 Gew% | NaDCC |
|  | 2 Gew% | Tenside | 2 Gew% | Tenside |
|  |  |  | 2 Gew% | NaF |

Tabelle IV

| Spülgänge | Glas | | | | | | Besteck | | | | | |
|---|---|---|---|---|---|---|---|---|---|---|---|---|
|  | Roma | | Alexandra | | Kölsch | | Messer | | Löffel | | Gabel | |
|  | C | D | C | D | C | D | C | D | C | D | C | D |
| 50 | 0 | 0 | 0 | 0 | 0,5 | 0 | 1,0 | 0 | 1,0 | 0 | 1,0 | 0 |
| 125 | 0,5 | 0 | 0,5 | 0 | 0,5 | 0 | 2,0 | 0 | 1,0 | 0 | 1,0 | 0 |
| 250 | 1,0 | 0 | 0,5 | 0 | 1,0 | 0 | 1,0 | 0 | 1,0 | 0 | 1,0 | 0 |
| 375 | 1,5 | 0 | 1,0 | 0 | 1,0 | 0 | 1,5 | 0 | 1,5 | 0 | 1,5 | 0 |
| 500 | 1,5 | 0 | 1,0 | 0 | 1,5 | 0 | 1,5 | 0 | 1,5 | 0 | 1,5 | 0 |
| 750 | 2,0 | 0 | 1,5 | 0 | 2,0 | 0 | 2,0 | 0 | 2,0 | 0 | 1,5 | 0 |
| 1000 | 2,5 | 0,5 | 2,0 | 0 | 2,5 | 0 | 2,0 | 0,5 | 2,0 | 0 | 2,0 | 0 |

Das Korrosionsergebnis dieser beiden Versuche nach 1000 Spülgängen wurde am Beispiel des Bechers "Roma" mit dem Rasterelektronenmikroskop untersucht. Selbst bei einer Vergrößerung um das 10 000fache war ein Schaden kaum sichtbar, wenn Fluorionen zugegen waren.

Beispiel 5

Wie Beispiel 4, jedoch wurde anstelle von NaF in Rezeptur D $Na_2PO_3F$ verwendet. Der Schadensverlauf am Spülgut war mit dem von Rezeptur D praktisch vergleichbar. Jedoch waren am Metallkörper der Maschine selbst nach 1000 Spülgängen keine weißen Streifen zu erkennen.

Beispiel 6

Es wurde zum einen ein Geschirrspülmittel der Zusammensetzung E:
40 Gew% kristallines Alkalischichtsilikat
25 Gew% Soda wasserfrei
28,85 Gew% Natriumsulfat wasserfrei

1,9 Gew% Maleinsäureanhydrid-methylen-vinylester, Pulver (92 % Wirksubstanz)
2,25 Gew% Natriumdichlorisocyanurat • 2 $H_2O$
2 Gew% Tensid
und zum anderen ein Geschirrspülmittel der Zusammensetzung F verwendet, die im wesentlichen derjenigen von E entsprach, wobei aber 2 Gew% des Sodas durch 2 Gew% $Na_2PO_3F$ ersetzt wurden.
Die Ergebnisse dieses Vergleichs sind in der Tabelle V zusammengestellt.

## Tabelle V

| Spülgänge | Glas | | | | | | Besteck | | | | | |
|---|---|---|---|---|---|---|---|---|---|---|---|---|
| | Roma | | Alexandra | | Kölsch | | Messer | | Löffel | | Gabel | |
| | E | F | E | F | E | F | E | F | E | F | E | F |
| 50 | 0 | 0 | 0 | 0 | 0 | 0 | 0 | 0 | 0 | 0 | 0 | 0 |
| 125 | 0 | 0 | 0 | 0 | 0 | 0 | 0 | 0 | 0 | 0 | 0 | 0 |
| 250 | 0 | 0 | 0 | 0 | 0 | 0 | 0 | 0 | 0 | 0 | 0 | 0 |
| 375 | 0,5 | 0 | 0 | 0 | 0,5 | 0 | 0,5 | 0 | 0 | 0 | 0,5 | 0 |
| 500 | 0,5 | 0 | 0 | 0 | 0,5 | 0 | 0,5 | 0 | 0 | 0 | 0,5 | 0 |
| 750 | 0,5 | 0 | 0,5 | 0 | 0,5 | 0 | 1,0 | 0 | 0 | 0 | 0,5 | 0 |
| 1000 | 1,5 | 0 | 0,5 | 0 | 0,5 | 0,5 | 1,0 | 0 | 0 | 0 | 0,5 | 0 |

Es zeigt sich deutlich, daß selbst die nur schwach korrodierende Formulierung E auf der Basis eines Schichtsilikates durch die gleichzeitige Verwendung einer Fluorverbindung mit hydrolysierbaren Fluoridionen in der Gesamtkorrosion noch positiv beeinflußt werden kann.

## Patentansprüche

1. Verwendung eines Mittels zur Verhinderung von Korrosion an keramischen Oberflächen wie Glas, Emaille oder Glasuren auf Porzellan enthaltend eine Fluorverbindung, die in wäßrigem Medium mindestens schwach löslich ist, dadurch gekennzeichnet, daß das Mittel in wäßrigem Medium bei einem pH-Wert von größer als 7 benutzt wird.

## Claims

1. Use of an agent for preventing corrosion on ceramic surfaces, such as glass, enamel or glazes on porcelain, containing a fluorine compound which is at least slightly soluble in an aqueous medium, wherein the agent is used in an aqueous medium at a pH of greater than 7.

## Revendications

1. Utilisation d'un agent pour empêcher la corrosion sur les surfaces céramiques telles que verre, émail ou glaçures sur porcelaine contenant un composé fluoré, qui est au moins faiblement soluble en milieu aqueux, caractérisée en ce que le produit est utilisé en milieu aqueux à un pH de plus de 7.